# EUROPEAN PATENT APPLICATION

(11) **EP 4 047 373 A1**
(43) Date of publication of application: **24.08.2022**
(21) Application number: 20877027.1
(22) Date of filing: 07.10.2020
(51) Int. Cl.: G01N 35/00, G01N 35/10

(54) **AUTOMATED ANALYZER**

(30) Priority: 18.10.2019 JP 2019191362
(71) Applicant: Hitachi High-Tech Corporation, Minato-ku Tokyo 105-6409 (JP)
(72) Inventor: TAKAYAMA, Hiroyuki, Tokyo 105-6409 (JP); KAWAHARA, Tetsuji, Tokyo 105-6409 (JP); MINAMI, Noritaka, Tokyo 105-6409 (JP)
(74) Representative: Strehl Schübel-Hopf & Partner
(86) International application number: PCT/JP2020/037971
(87) International publication number: WO 2021/075324

(57) **Abstract**

To reduce water consumption of an automatic analyzer without impairing analytical performance. An automatic analyzer: has a washing tank in which an exterior of a probe is washed with washing water, a pump to supply washing water stored in a tank to the washing tank through a first flow channel, and a flow channel switching mechanisms to switch between supplying washing water to the washing tank through the first flow channel and returning washing water to the tank through a second flow channel connecting the first flow channel and the tank; sets a washing period when washing water is supplied to the washing tank through the first flow channel and the probe is washed with washing water in a cycle constituting a sequence of the automatic analyzer; and controls the flow channel switching mechanism so as to return washing water to the tank through the second flow channel during the washing period in a cycle of not washing the probe.

## Description

### [Technical Field]

The present invention relates to an automatic analyzer.

### [Background Art]

An automatic analyzer such as a biochemical automatic analyzer and an immunological automatic analyzer includes a washing tank washing a reagent probe dispensing a reagent or a sample probe dispensing a sample. In order to wash the interior and exterior of a probe contacting a reagent and a sample, washing water is discharged from the probe and the reagent and the sample adhered to the interior of the probe are washed away (called interior washing), and the probe is inserted to the washing tank, the washing water is discharged toward the probe from a washing water discharge port arranged in the washing tank, and thereby the reagent and the sample adhered to the exterior of the probe are washed away (called exterior washing).

In Patent Literature 1, there is disclosed an automatic analyzer capable of controlling the valve opening of a solenoid valve arranged in a flow channel of the washing liquid to suppress excessive pressure fluctuation of the flow channel in order to prevent occurrence of the overshoot and water hammer phenomenon by pressure fluctuation of the flow channel supplying the washing liquid.

### [Citation List]

### [Patent Literature]

### Patent Literature 1:

Japanese Unexamined Patent Application Publication No. 2016-121923

### [Summary of Invention]

### [Technical Problem]

Reduction of the water consumption amount in an automatic analyzer has become more and more important for reduction of the environmental load and the running cost.

Although the detail will be described below, in an automatic analyzer, the washing operations of the reagent probe and the sample probe are executed in every cycle regardless of presence and absence of the dispensing operations by the probe. The reason of doing so is that, supply of the washing water to the interior of multiple washing tanks, reaction cells, and probes is made constant at every cycle, thereby the fluctuation profile of the piping pressure supplying the washing water in a cycle period is kept constant to stabilize the analysis performance. However, to supply the washing water for washing the probe in spite that dispensing by the probe has not been executed and therefore washing of the probe is unnecessary means that the water is discharged uselessly. In exterior washing of the probe particularly, since the use amount of the washing water incurred for the washing operations of one time is more compared to the interior washing, reduction of the washing water incurred for the exterior washing is effective in reduction of the water consumption amount of the automatic analyzer. On the other hand, when supply of the washing water to the washing tank is controlled simply based on use and disuse of probe washing, the analysis performance may possibly deteriorates as described above.

In Patent Literature 1, there is exemplified a flow channel configuration capable of switching the flow channel between the washing unit and the tank using a three-way valve. By changing stepwise the duty ratio in switching the flow channel, excessive pressure fluctuation of the flow channel is suppressed. However, in spite of the fact that the flow channel configuration is similar, the problem described above is not mentioned, and a solution of the problem described above is not suggested.

### [Solution to Problem]

An automatic analyzer which is an embodiment of the present invention includes a dispensing mechanism having a probe and dispensing a reagent or a sample, a washing tank in which an exterior of the probe is washed with washing water, a tank to store washing water, a pump to supply washing water stored in the tank to the washing tank through a first flow channel, a flow channel switching mechanism to switch between supplying washing water to the washing tank through the first flow channel and returning washing water to the tank through a second flow channel connecting the first flow channel and the tank, and a control unit to control the flow channel switching mechanism, a washing period of supplying washing water to the washing tank through the first flow channel and washing the probe with washing water is set in a cycle constituting a sequence of the automatic analyzer, and the control unit controls the flow channel switching mechanism so as to return washing water to the tank through the second flow channel in the washing period in a cycle of not washing the probe.

### [Advantageous Effect of Invention]

The water consumption amount of the automatic analyzer is reduced without deteriorating the analysis performance.

Other problems and new characteristic will be clarified by the content of the present description and the attached drawings.

### [Brief Description of Drawings]

Fig. 1 is a schematic view of an automatic analyzer.
Fig. 2 is a view showing a conventional flow channel configuration of washing water.
Fig. 3A is a view showing a flow channel configuration of washing water according to the present example.
Fig. 3B is a time chart of washing operations of washing tanks.
Fig. 4 is an example of configuring a flow channel using 2-way valves.
Fig. 5A is an example of configuring a flow channel using a 3-way valve.
Fig. 5B is a view explaining operations of solenoid valves in the flow channel of Fig. 5A.
Fig. 6A is an example of configuring a flow channel using a 3-way valve.
Fig. 6B is a view explaining operations of a solenoid valve in the flow channel of Fig. 6A.
Fig. 7A is a view showing a flow channel configuration of supplying washing water to washing tanks.
Fig. 7B is a time chart of washing operations of washing tanks.
Fig. 8A is a view showing a flow channel configuration of supplying washing water to washing tanks.
Fig. 8B is a time chart of washing operations of washing tanks.
Fig. 9A is a view showing a flow channel configuration of supplying washing water to washing tanks.
Fig. 9B is a time chart of washing operations of washing tanks.

### [Description of Embodiments]

An embodiment of the present invention will be hereinafter explained in detail referring to the drawings.

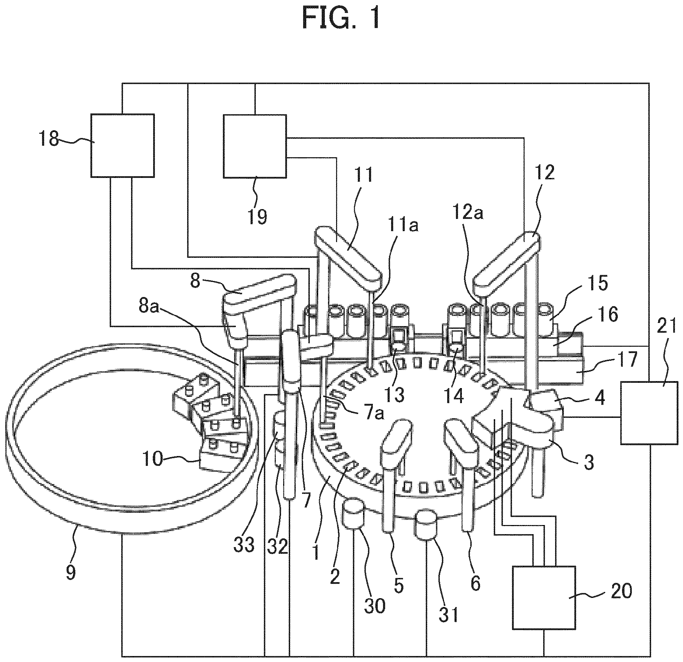

Fig. 1 is a schematic view of an automatic analyzer. A biological sample such as blood and urine (will be hereinafter referred to simply as a sample) of an analysis object is stored in a sample container 15. One or more sample container 15 is mounted on a sample rack 16, and is transferred by a sample transfer mechanism 17. A reagent used for analysis of a sample is stored in a reagent bottle 10, and multiple reagent bottles 10 are disposed to be arrayed in the circumferential direction on a reagent disk 9. The sample and the reagent are mixed and made to react with each other within a reaction vessel 2. Multiple reaction vessels 2 are disposed to be arrayed in the circumferential direction of a reaction disk 1. With respect to the sample, the sample is dispensed to the reaction vessel 2 by a first or second sample dispensing mechanism 11, 12 from the sample container 15 transferred to a sample dispensing position by the sample transfer mechanism 17. On the other hand, with respect to the reagent, the reagent is dispensed to the reaction vessel 2 by a reagent dispensing mechanism 7, 8 from the reagent bottle 10. Mixed liquid (reaction liquid) of the sample and the reagent dispensed to the reaction vessel 2 is stirred by a stirring mechanism 5, 6, transmitted light obtained from a light source not illustrated through the reaction liquid of the reaction vessel 2 is measured by a spectrophotometer 4, and thereby absorbance of the reaction liquid is measured. As an analysis process in the automatic analyzer, concentration and the like of a predetermined component of an analysis item according to the reagent is calculated from the absorbance of the mixed liquid (reaction liquid) measured by the spectrophotometer 4. The reaction vessel 2 having finished measurement is washed by a washing mechanism 3.

The first (second) sample dispensing mechanism 11 (12) includes a sample probe 11a (12a) disposed with its distal end being directed downward, and a syringe for sample 19 is connected to the sample probe 11a (12a). The first (second) sample dispensing mechanism 11 (12) is configured to be capable of the turning operations to the horizontal direction and the vertical operations, inserts the sample probe 11a (12a) to the sample container 15 to aspirate the sample, inserts the sample probe 11a (12a) to the reaction vessel 2 to discharge the sample, and thereby dispenses the sample from the sample container 15 to the reaction vessel 2. In the operating range of the first (second) sample dispensing mechanism 11 (12), a washing tank 13 (14) washing the sample probe 11a (12a) is disposed.

The reagent dispensing mechanism 7, 8 includes a reagent probe 7a, 8a disposed with its distal end being directed downward, and a syringe for reagent 18 is connected to the reagent probe 7a, 8a. The reagent dispensing mechanism 7, 8 is configured to be capable of the turning operations to the horizontal direction and the vertical operations, inserts the reagent probe 7a, 8a to the reagent bottle 10 to aspirate the reagent, inserts the reagent probe 7a, 8a to the reaction vessel 2 to discharge the reagent, and thereby dispenses the reagent from the reagent bottle 10 to the reaction vessel 2. In the operating range of the reagent dispensing mechanism 7, 8, a washing tank 32, 33 washing the reagent probe 7a, 8a by the washing water is disposed.

The stirring mechanism 5, 6 is configured to be capable of the turning operations to the horizontal direction and the vertical operations, and stirs the mixed liquid (reaction liquid) of the sample and the reagent by being inserted to the reaction vessel 2. In the operating range of the stirring mechanism 5, 6, a washing tank 30, 31 washing the stirring mechanism 5, 6 by the washing water is disposed.

It is configured that the washing water is supplied to the washing mechanism 3, the washing tanks 13, 14, 30, 31, 32, 33, and the like by a washing pump 20. The detail thereof will be described below.

The total operations of the automatic analyzer are controlled by a control unit 21. Also, in Fig. 1, in order to prevent complication of illustration, connection of respective mechanisms configuring the automatic analyzer and the control unit 21 is shown with a part thereof being omitted. Further, a solenoid valve configuring a flow channel switching mechanism described below is also controlled by the control unit 21.

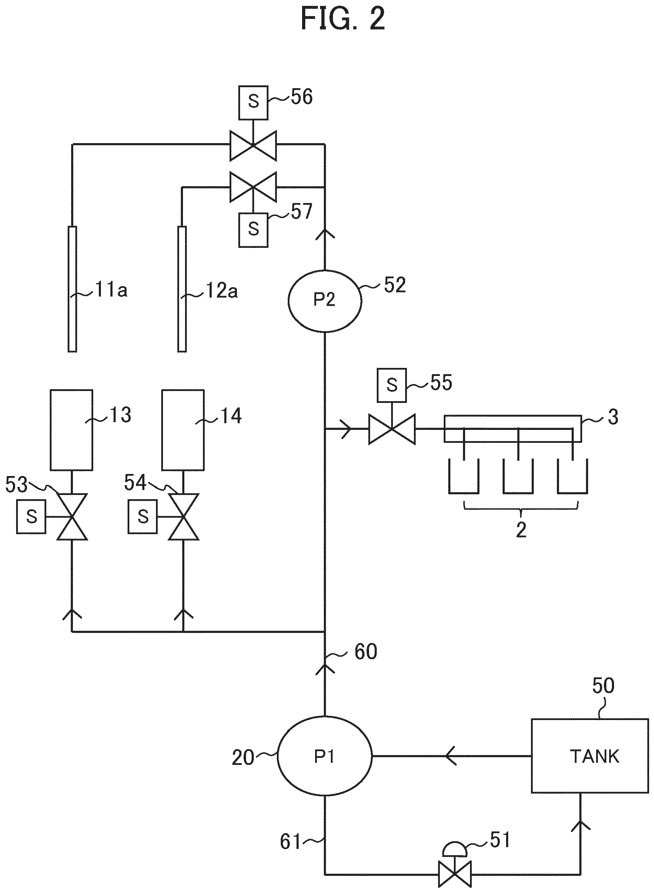

In the automatic analyzer, in order to prevent contamination, washing is executed frequently with respect to the probe, the reaction vessel, and the like. Fig. 2 shows a schematic flow channel configuration of the washing water of a prior art in an automatic analyzer. The washing water used for washing is stored in a tank 50, and is supplied by the washing pump 20 to respective mechanisms executing washing. Here, as an example of the mechanism executing washing, there is shown the washing mechanism 3 washing the reaction vessel 2, the probe 11a, 12a executing interior washing of the probe, and the washing tank 13, 14 executing exterior washing of the probe. These mechanisms are connected to a flow channel 60 (first flow channel) through a solenoid valve respectively, the washing water from the washing pump 20 being supplied to the flow channel 60, and the washing water is supplied. Also, for interior washing of the probe, since the washing water is supplied in a state of being pressurized compared to interior washing of other mechanism, it is configured to supply the washing water from the flow channel 60 to the probe in a state of being pressurized by a pressure pump 52. Further, in order to regulate the pressure of the flow channel 60, a return flow channel 61 provided with a regulating valve 51 is arranged between the washing pump 20 and the tank 50.

The analysis operations of the automatic analyzer is executed by that respective mechanisms operate according to a sequence determined beforehand. The washing operations are also incorporated in the sequence of the automatic analyzer, and the washing water is supplied to respective mechanisms executing the washing operations by opening a solenoid valve at timing determined in a cycle configuring the sequence.

In the flow channel configuration of a prior art shown in Fig. 2, in order to stabilize the analysis performance, the washing operations for the reagent probe and the sample probe are executed at every cycle and at predetermined timing regardless of presence and absence of the dispensing operations by the probe. The reason of doing so is as the following. In an automatic analyzer, in order to improve the throughput, it is preferable to shorten the cycle time as much as possible. Therefore, the washing periods for the reagent probe, the sample probe, the reaction vessel, and the like are set in a state of overlapping with each other in one cycle. On the other hand, in the flow channel configuration of Fig. 2, since it is configured that the washing water is supplied to respective mechanisms being branched from the flow channel 60, according to the overlapping condition of the washing operations for respective mechanisms, there is a risk that the washing water of a required amount cannot be supplied at required pressure, and insufficient washing may occur.

Therefore, the timing of the washing operations for respective mechanisms is designed not to cause insufficient washing a far as the washing operations are executed in accordance with a rule of the sequence. Therefore, even when there is no dispensing operations for the probe and washing of the probe is unnecessary, supply of the washing water to the washing tank cannot be stopped. For the time being, it is assumed that supply of the washing water to the washing tank 13 is stopped due to a reason that washing of the probe 11a is unnecessary. In this case, a solenoid valve 53 comes to be closed in spite that the solenoid valve 53 is to be opened according to the design of the sequence, and the state of the flow channel 60 comes to change from the assumption in the design of the sequence. When opening/closing of a solenoid valve differs from the assumption, it causes, for example, variation of the piping pressure of the flow channel 60 and shift of the opening/closing timing of the solenoid valve controlling supply of the washing water from the flow channel 60 to other mechanisms executing washing operations. As a result, there is a risk that washing of the probe and the reaction vessel becomes insufficient.

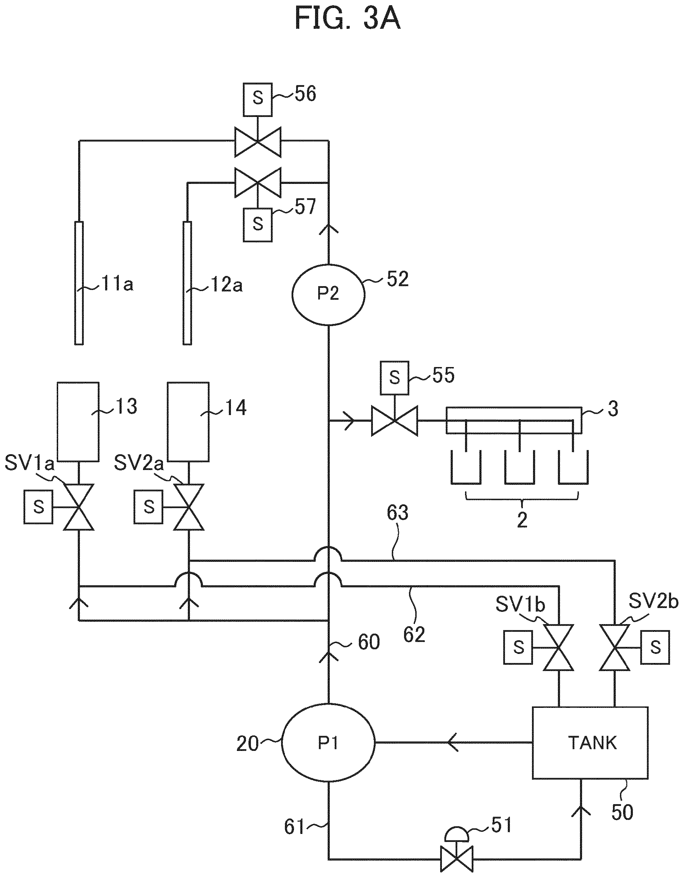

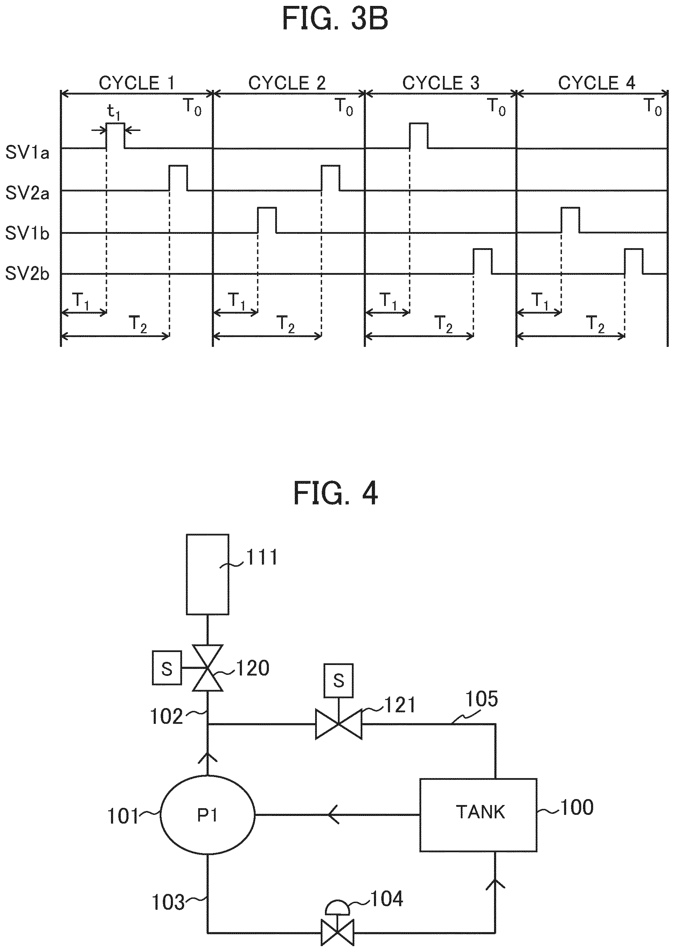

On the other hand, the flow channel configuration of the present embodiment is shown in Fig. 3A. The different points with the flow channel configuration of Fig. 2 are that a second flow channel connecting the first flow channel and the tank is arranged to return the washing water to the tank and that a flow channel switching mechanism for switching the supply destination of the washing water between the washing tank and the tank is arranged. To be more specific, a flow channel 62 (second flow channel) provided with a solenoid valve SV1b is arranged corresponding to a solenoid valve SVla controlling supply of the washing water to the washing tank 13, and a flow channel 63 (second flow channel) provided with a solenoid valve SV2b is arranged corresponding to a solenoid valve SV2a controlling supply of the washing water to the washing tank 14. A time chart showing operations in one cycle of the solenoid valves SV1a, SV1b, SV2a, and SV2b in the present flow channel is shown in Fig. 3B. It is set that the cycle time is T0, the washing operation for the washing tank 13 is started at a time T1 after the start of the cycle, and the washing operation for the washing tank 14 is started at a time T2 after the start of the cycle, and the washing time for both of the washing tanks is set to be a time t1.

In Fig. 3B, there are shown the solenoid valve operations of the case of executing exterior washing operations of the probe for both of the washing tanks 13, 14 in the cycle 1, executing exterior washing operations of the probe for only the washing tank 14 in the cycle 2, executing exterior washing operations of the probe for only the washing tank 13 in the cycle 3, and not executing exterior washing operations of the probe for both of the washing tanks 13, 14 in the cycle 4 (the solenoid valve is to be opened in the pulse waveform section). As can be read from this time chart, when washing operations by the washing tank 13 are not executed, the solenoid valve SVla is controlled to be closed whereas the solenoid valve SV1b is controlled to be opened at same operation timing for a same period with the solenoid valve SVla (the cycles 2, 4). In a similar manner, when washing operations by the washing tank 14 are not executed, the solenoid valve SV2a is controlled to be closed whereas the solenoid valve SV2b is controlled to be opened at same operation timing for a same period with the solenoid valve SV2a (the cycles 3, 4). Also, the solenoid valve SVla and the solenoid valve SV1b or the solenoid valve SV2a and the solenoid valve SV2b are made equal with respect to the aperture diameter and the like of the port, and the flow rate thereof is made equal when the piping pressure of the flow channel 60 is equal.

Thus, when the washing operations for the washing tank are unnecessary, there is no event that the washing water is discharged uselessly by returning the washing water to the tank 50 through the second flow channel, the fluctuation profile of the piping pressure in the cycle period of the flow channel 60 can be made identical regardless of presence and absence of the washing operations by matching the timing of returning the washing water to the tank 50 to the timing of supplying the washing water to the washing tank at the time of the washing operations, and occurrence of the problem such as dispersion of the analysis data caused by dispersion of the washing water amount can be prevented.

A concrete configuration example of the flow channel switching mechanism will be hereinafter explained.

Fig. 4 is an example of configuring the flow channel switching mechanism by 2-way valves. The washing water used for washing is stored in a tank 100, and is supplied by a washing pump 101 to a flow channel 102 (first flow channel) continuing to a washing tank 111. Supply of the washing water to the washing tank 111 is controlled by a 2-way solenoid valve 120. In order to regulate the pressure of the flow channel 102, a return flow channel 103 provided with a regulating valve 104 is arranged between the washing pump 101 and the tank 100. Also, a flow channel 105 (second flow channel) branched from the flow channel 102, continuing to the tank 100, and provided with a 2-way solenoid valve 121 is arranged. In comparison with Fig. 3A, for example, when the washing tank 111 corresponds to the washing tank 13, the solenoid valve SVla is equivalent to a solenoid valve 120, and the solenoid valve SV1b is equivalent to a solenoid valve 121. The solenoid valve 120 and the solenoid valve 121 operate complementarily in a cycle. That is to say, in the washing period of the washing tank 111 in a cycle, according to execution of exterior washing of a probe, either one of the 2-way solenoid valve 120 and the 2-way solenoid valve 121 are opened, and the other is closed.

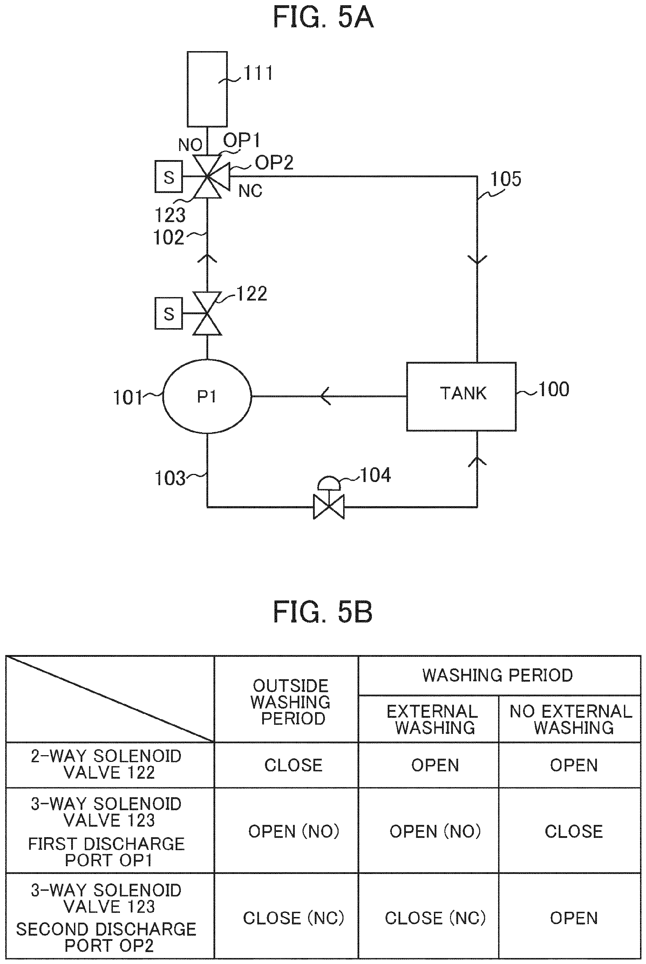

Fig. 5A is another configuration example of the flow channel switching mechanism. A 2-way solenoid valve 122 and a 3-way solenoid valve 123 are arranged in series in the flow channel 102. In the 3-way solenoid valve 123, the supply port is connected to the flow channel 102, a first discharge port OP1 is connected to the washing tank 111, and a second discharge port OP2 is connected to the flow channel 105 to the tank 100. Also, the first discharge port OP1 is normal open (NO), and the second discharge port OP2 is normal close (NC).

Operations of the solenoid valve in the flow channel configuration of Fig. 5A are shown in Fig. 5B. The 2-way solenoid valve 122 is made close outside the washing period of the washing tank 111 in the cycle, and the 2-way solenoid valve 122 is made open in the washing period of the washing tank 111 in the cycle. Also, in the washing period, the first discharge port OP1 is made open (NO) and the second discharge port OP2 is made close (NC) when exterior washing of the probe is executed, and the first discharge port OP1 is made close and the second discharge port OP2 is made open when exterior washing of the probe is not executed. According to the present flow channel switching mechanism, since it is configured that the flow channel is switched by one set of the 3-way solenoid valve, there is an advantage that occurrence of the breakdown of the valve is easily noticed.

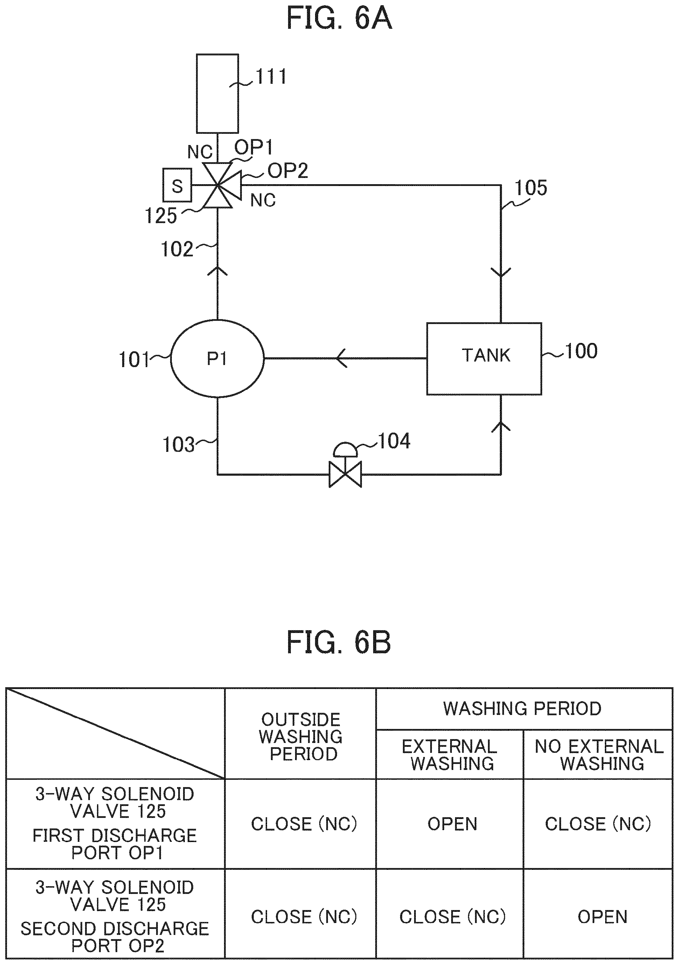

Fig. 6A is another configuration example of the flow channel switching mechanism. A 3-way solenoid valve 125 is used. In the 3-way solenoid valve 125, the supply port is connected to the flow channel 102, the first discharge port OP1 is connected to the washing tank 111, and the second discharge port OP2 is connected to the flow channel 105 to the tank 100. Also, both of the first discharge port OP1 and the second discharge port OP2 are normal close (NC).

Operations of the solenoid valve in the flow channel configuration of Fig. 6A are shown in Fig. 6B. Outside the washing period of the washing tank 111 in the cycle, both of the first discharge port OP1 and the second discharge port OP2 remain closed (NC). In the washing period, the first discharge port OP1 is made open and the second discharge port OP2 is made close (NC) when exterior washing of the probe is executed, and the first discharge port OP1 is made close (NC) and the second discharge port OP2 is made open when exterior washing of the probe is not executed. According to the present flow channel switching mechanism, since the solenoid valve for switching the flow channel can be made only one set, there is an advantage that the flow channel configuration can be simplified.

In the flow channel configuration of Fig. 3A where multiple washing tanks are present, the solenoid valve is arranged in each of the second flow channels. In the case of employing the flow channel configuration of Fig. 5A or Fig. 6A also, when multiple washing tanks are present, the flow channel configuration shown in Fig. 5A or Fig. 6A can be arranged in parallel with respect to the flow channel 102 and the tank 100.

However, depending on the timing of the washing operations of these multiple washing tanks, it is possible to commonalize the second flow channel and the solenoid valve arranged in the second flow channel to simplify the flow channel configuration. Examples of the flow channel configuration commonalizing the solenoid valve of the second flow channel will be hereinafter explained exemplifying a case where four sets of the washing tank are present.

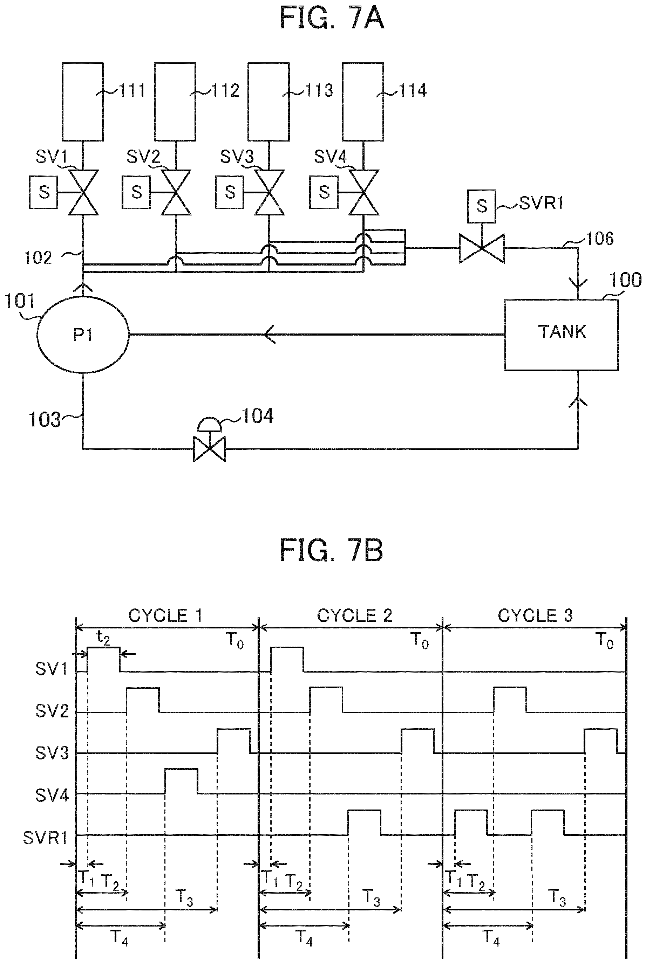

Fig. 7A is an example of the flow channel configuration of a case where four sets of washing tank 111 to 114 are provided, and washing operations in one cycle of the four sets of washing tank 111 to 114 are to be executed as per the cycle 1 of the time chart shown in Fig. 7B. That is to say, in one cycle, the washing periods of four sets of the washing tank 111 to 114 do not overlap with each other. In this case, a flow channel 106 (second flow channel) provided with a solenoid valve SVR1 can be arranged commonly to four sets of the washing tank 111 to 114. According to this flow channel configuration, when washing operations are not executed in a part of the washing tank out of four sets of the washing tank 111 to 114, in the washing period of the washing tank in question, solenoid valves SV1 to SV4 corresponding to the washing tank not executing washing operations are made close whereas the solenoid valve SVR1 is made open. For example, in the time chart of Fig. 7B, the cycle 2 is an example where the washing tank 113 does execute washing operations, and the cycle 3 shows an example where the washing tank 111 and the washing tank 113 do not execute washing operations.

Although Fig. 7A is an example where none of the timing of the washing operations in multiple washing tanks does not overlap wit each other, when the timing of washing operations of a part of the washing tanks overlaps, it is possible to commonalize the second flow channel according to overlapping of the timing to simplify the flow channel configuration.

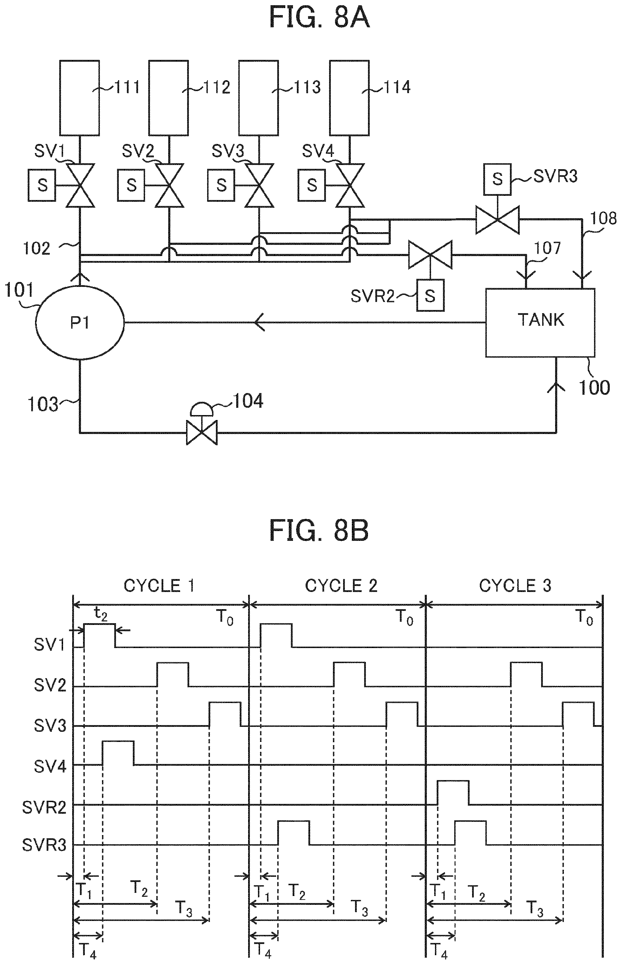

Fig. 8A is an example of the flow channel configuration of a case four sets of washing tank 111 to 114 are provided, and washing operations in one cycle of four sets of the washing tank 111 to 114 are to be executed as per the cycle 1 of the time chart shown in Fig. 8B. That is to say, in one cycle, the washing periods of the washing tank 111 and the washing tank 114 partly overlap with each other, and the washing periods of the washing tank 112 and the washing tank 113 do not overlap with the washing periods of other washing tanks.

In this case, by arranging the second flow channels of the number of sets of the washing tanks whose washing periods overlap with each other, the washing tanks whose washing periods overlap with each other can return the washing water to the tank 100 from different second flow channels. In the flow channel configuration of Fig. 8A, a flow channel 107 (second flow channel) provided with a solenoid valve SVR2 is arranged with respect to the washing tank 111, and a flow channel 108 (second flow channel) provided with a solenoid valve SVR3 is arranged commonly with respect to the washing tank 112 to the washing tank 114. Further, although the washing tank 112 and the washing tank 113 are connected to the flow channel 108 in Fig. 8A, with respect to these washing tanks whose washing periods do not overlap with each other, there is not any problem in being connected to either of the flow channel 107 and the flow channel 108.

In this flow channel configuration also, in a cycle where washing operations are not executed in the washing tank of a part of four sets of the washing tank 111 to 114, solenoid valves SV1 to SV4 corresponding to the washing tanks not executing washing operations are closed whereas the solenoid valve SVR2 or the solenoid valve SVR3 corresponding in the washing period of the washing tank in question is opened. For example, in the time chart of Fig. 8B, the cycle 2 is an example where the washing tank 114 does not execute washing operations, and the cycle 3 shows an example where the washing tank 111 and the washing tank 114 dos not execute washing operations.

In the flow channel switching mechanism described above, although the solenoid valve where opening/closing of the valve is ON/OFF-controlled is used for supply control of the washing water, by using a solenoid valve where opening/closing degree of the valve is controllable for switching control of the flow channel, even when the timings of washing operations of the washing tanks may overlap with each other, the flow channel configuration can be simplified.

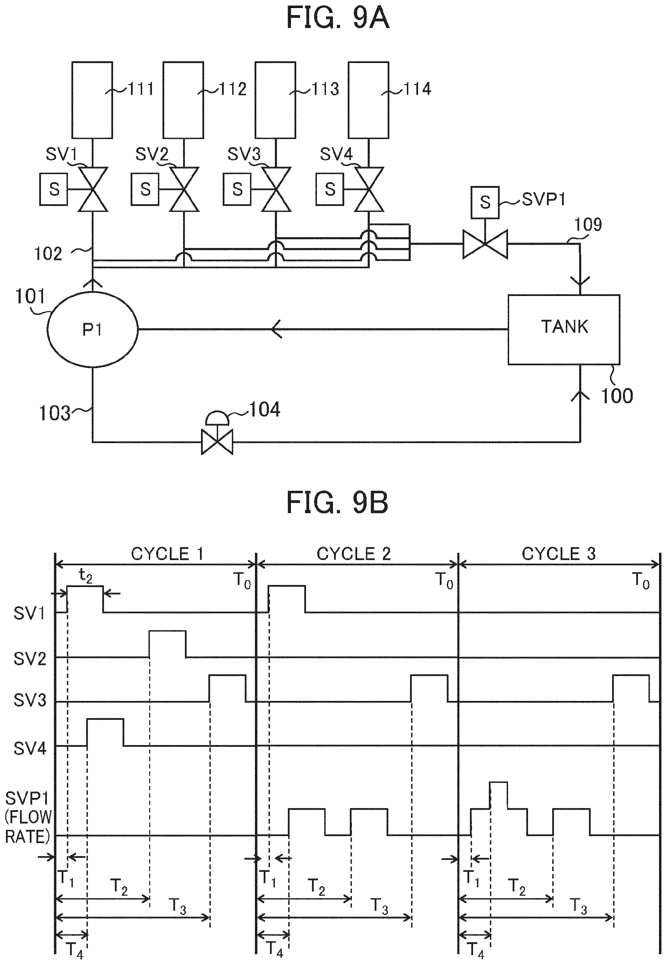

Fig. 9A is an example of the flow channel configuration of a case four sets of the washing tank 111 to 114 are provided, and washing operations in one cycle of four sets of the washing tank 111 to 114 are to be executed as per the cycle 1 of the time chart shown in Fig. 9B (same to the time chart shown in Fig. 8B).

According to the flow channel configuration shown in Fig. 9A, a flow channel 109 (second flow channel) provided with a solenoid valve SVP1 is arranged commonly with respect to four sets of the washing tank 111 to 114, and the solenoid valve SVP1 is a proportional control valve whose opening/closing degree is controllable. According to this flow channel configuration, when washing operations are not executed in a part of the washing tank out of four sets of the washing tanks 111 to 114, the solenoid valves SV1 to SV4 corresponding to the washing tank not executing washing operations are made close whereas the solenoid valve SVP1 is made open in the washing period of the washing tank in question, and its opening/closing degree is controlled according to overlapping of the washing periods. For example, in the time chart of Fig. 9B, the cycle 2 is an example where the washing tank 112 and the washing tank 114 do not execute washing operations, and the solenoid valve SVP1 is made open with an opening/closing degree achieving the flow rate of the solenoid valve SV4 or the solenoid valve SV2 in the washing period of the washing tank 112 and the washing tank 114. On the other hand, the cycle 3 shows an example where the washing tank 111, the washing tank 112, and the washing tank 114 do not execute washing operations. In this case, in a period where washing operations do not overlap with each other out of the washing periods of the washing tank 111 and the washing tank 114 or in the washing period of the washing tank 112, the solenoid valve SVP1 is made open with an opening/closing degree achieving the flow rate of the solenoid valve SV1, the solenoid valve SV4, or the solenoid valve SV2. Also, in a washing period where washing operations of the washing tank 111 and the washing tank 114 overlap with each other, the solenoid valve SVP1 is made open with an opening/closing degree at which the flow rate thereof becomes the sum of the flow rate of the solenoid valve SV1 and the flow rate of the solenoid valve SV4.

Also, the present invention is not limited to the embodiments described above, and various modifications are included. For example, in the case of the flow channel configuration of Fig. 3A, to execute such control of making the solenoid valve SV1b close and the solenoid valve SV2b open in the washing period of the washing tank 13 and making the solenoid valve SV1b open and the solenoid valve SV2b close in the washing period of the washing tank 14 in a cycle where both washing tanks do not execute washing operations is also possible since the piping pressure profile of the flow channel 60 (first flow channel) does not deviate from a piping pressure profile assumed in the cycle design. The embodiments described above were explained for the purpose of easy understanding of the present invention, and is not to be limited necessarily to those including all configurations having been explained. Further, it is also possible to replace a part of a configuration of an example of an embodiment by a configuration of another example, and to add a configuration of another example.

### List of Reference Signs

1 reaction disk
2 reaction vessel
3 washing mechanism
4 spectrophotometer
5, 6 stirring mechanism
7, 8 reagent dispensing mechanism
7a, 8a reagent probe
9 reagent disk
10 reagent bottle
11, 12 sample dispensing mechanism
11a, 12a sample probe
13, 14, 30, 31, 32, 33 washing tank
15 sample container
16 sample rack
17 sample transfer mechanism
18 syringe for reagent
19 syringe for sample
20 washing pump
21 control unit
50, 100 tank
51, 104 regulating valve
52 pressure pump
53, 54, 55, 56, 57, 120, 121, 122, 123, 125 solenoid valve
60, 102 flow channel (first flow channel)
61, 103 return flow channel
62, 63, 105, 106, 107, 108, 109 flow channel (second flow channel)
111, 112, 113, 114 washing tank

## Claims

1. An automatic analyzer comprising:
a dispensing mechanism having a probe and dispensing a reagent or a sample;
a washing tank in which an exterior of the probe is washed with washing water;
a tank to store washing water;
a pump to supply washing water stored in the tank to the washing tank through a first flow channel;
a flow channel switching mechanism to switch between supplying washing water to the washing tank through the first flow channel and returning washing water to the tank through a second flow channel connecting the first flow channel and the tank; and
a control unit to control the flow channel switching mechanism,
wherein a washing period of supplying washing water to the washing tank through the first flow channel and washing the probe with washing water is set in a cycle constituting a sequence of the automatic analyzer, and
wherein the control unit controls the flow channel switching mechanism so as to return washing water to the tank through the second flow channel in the washing period in a cycle of not washing the probe.

2. An automatic analyzer according to Claim 1,
wherein the flow channel switching mechanism has a first 2-way solenoid valve installed between the first flow channel and the washing tank and a second 2-way solenoid valve installed in the second flow channel, and
wherein the control unit, during the washing period, opens the first 2-way solenoid valve and closes the second 2-way solenoid valve in a cycle of washing the probe and closes the first 2-way solenoid valve and opens the second 2-way solenoid valve in a cycle of not washing the probe.

3. An automatic analyzer according to Claim 1,
wherein the flow channel switching mechanism has a 2-way solenoid valve installed in the first flow channel and a 3-way solenoid valve having a supply port connected to the first flow channel, a first discharge port connected to the washing tank, and a second discharge port connected to the second flow channel, and
wherein the control unit closes the 2-way solenoid valve during a period other than the washing period and opens the 2-way solenoid valve during the washing period and, during the washing period, opens the first discharge port and closes the second discharge port in a cycle of washing the probe and closes the first discharge port and opens the second discharge port in a cycle of not washing the probe.

4. An automatic analyzer according to Claim 1,
wherein the flow channel switching mechanism has a 3-way solenoid valve having a supply port connected to the first flow channel, a first discharge port connected to the washing tank, and a second discharge port connected to the second flow channel, both the first and second discharge ports being normally closed, and
wherein the control unit, during the washing period, opens the first discharge port and closes the second discharge port in a cycle of washing the probe and closes the first discharge port and opens the second discharge port in a cycle of not washing the probe.

5. An automatic analyzer according to Claim 1,
wherein the automatic analyzer has a plurality of the washing tanks, and
wherein a plurality of the second flow channels are installed in response to the plural washing tanks.

6. An automatic analyzer according to Claim 1,
wherein the automatic analyzer has a plurality of the washing tanks,
wherein the second flow channel is installed commonly in response to the plural washing tanks, and
wherein the washing periods of the plural washing tanks having the commonly installed second flow channel do not overlap in a cycle constituting a sequence of the automatic analyzer.

7. An automatic analyzer according to Claim 1,
wherein the automatic analyzer has a plurality of the washing tanks including a first washing tank and a second washing tank,
wherein the washing period of the first washing tank and the washing period of the second washing tank overlap with each other in a cycle constituting a sequence of the automatic analyzer, and
wherein the second flow channel corresponding to the first washing tank and the second flow channel corresponding to the second washing tank are different from each other.

8. An automatic analyzer according to Claim 1,
wherein the automatic analyzer has a plurality of the washing tanks,
wherein the second flow channel is installed commonly in response to the plural washing tanks,
wherein the flow channel switching mechanism has a solenoid valve that is installed in the second flow channel and can control the degree of opening and closing,
wherein, there is a period when the washing periods of the plural washing tanks having the commonly installed second flow channel overlap in a cycle constituting a sequence of the automatic analyzer, and
wherein the control unit controls the degree of opening and closing of the solenoid valve in response to overlapping of the washing periods in a cycle of not washing the probes in the plural washing tanks having the overlapping washing period.

9. An automatic analyzer according to Claim 1,
wherein the automatic analyzer has a washing mechanism to wash a reaction vessel into which a sample or a reagent is dispensed, and
wherein washing water stored in the tank is supplied to the washing mechanism through the first flow channel.

10. An automatic analyzer according to Claim 9, including:
a pressure pump to pressurize and supply washing water from the first flow channel to the probe,
wherein an interior of the probe is washed with washing water pressurized by the pressure pump.

11. An automatic analyzer according to Claim 1, including:
a return flow channel in which a regulating valve is installed between the pump and the tank,
wherein a pressure in the first flow channel is regulated.
